# EUROPEAN PATENT APPLICATION

(11) **EP 4 513 962 A1**
(43) Date of publication of application: **26.02.2025**
(21) Application number: 23791032.8
(22) Date of filing: 04.04.2023
(51) Int. Cl.: H04W 36/00

(54) **INFORMATION PROCESSING METHOD AND APPARATUS, DEVICE, AND STORAGE MEDIUM**

(30) Priority: 19.04.2022 CN 202210410340
(71) Applicant: Datang Mobile Communications Equipment Co., Ltd., Beijing 100085 (CN)
(72) Inventor: ZHANG, Bufang, Beijing 100085 (CN); XU, Meng, Beijing 100085 (CN); LIANG, Jing, Beijing 100085 (CN)
(74) Representative: Studio Torta S.p.A.
(86) International application number: PCT/CN2023/086291
(87) International publication number: WO 2023/202376

(57) **Abstract**

Embodiments of the present disclosure provide an information processing method and apparatus, a device and a storage medium, a user equipment determines a PCell reconfiguration completion message according to a target primary cell PCell and a target primary secondary cell PSCell which are to be switched, where the PCell reconfiguration completion message includes a PSCell reconfiguration completion message and indication information, and the indication information is used to indicate the target PSCell and/or a target SN where the target PSCell is located; transmits a PCell reconfiguration completion message to a network device. In the embodiments of the present disclosure, while the user equipment transmits the reconfiguration completion message, the identity of the target PSCell is indicated through an indication message, in this way, the target PCell can accurately transmit the PSCell reconfiguration completion message to the corresponding target PSCell, thereby further improving the reliability and robustness of mobile communication.

## Description

The present disclosure claims priority to Chinese patent application No. 202210410340.6, which was filed with the Chinese Intellectual Property Office on April 19, 2022 and titled "INFORMATION PROCESSING METHOD, APPARATUS, DEVICE AND STORAGE MEDIUM". The disclosure of which is hereby incorporated by reference in its entirety.

### TECHNICAL FIELD

The present disclosure relates to the field of communication technologies, and in particular, to an information processing method and apparatus, a device and a storage medium.

### BACKGROUND

In a multi-connection architecture, there is a master node (Master Node, MN) and one or more secondary nodes (Secondary Node, SN), and the MN can preconfigure multiple candidate primary cells (PCell) and candidate primary secondary cells (PSCell) for a user equipment. In order to improve the robustness and reliability of mobile communication, the user equipment can perform switching of PCell or PSCell according to requirements.

During the switching process, the UE will select a candidate PCell cell and a candidate PSCell cell that meet conditions as a target PCell cell and a target PSCell, and perform corresponding PCell or PSCell switching process, and feedback a reconfiguration completion message to the target PCell and the target PSCell.

However, during the above process, it may be possible that the target PSCell fails to receive the PSCell reconfiguration completion message, thus making the target PSCell unable to provide corresponding services for the user equipment.

### SUMMARY

The present application provides an information processing method and apparatus, a device and a storage medium, which are used to solve the technical problem of a target PSCell being unable to receive a PSCell reconfiguration completion message, thereby ensuring that the target PSCell can provide corresponding services to user equipment.

In a first aspect, an embodiment of the present disclosure provides an information processing method applied to a user equipment, the information processing method includes: determining a PCell reconfiguration completion message according to a target primary cell PCell and a target primary secondary cell PSCell which are to be switched, where the PCell reconfiguration completion message includes a PSCell reconfiguration completion message and indication information, and the indication information is used to indicate the target PSCell and/or a target secondary node SN where the target PSCell is located; transmitting the PCell reconfiguration completion message to the network device.

In some optional implementations, the indication information includes at least one of the following:
cell identification information of the target PSCell;
frequency information of the target PSCell;
a reconfiguration identifier corresponding to the PCell reconfiguration completion message, where the reconfiguration identifier is the same as a reconfiguration identifier carried in a reconfiguration message for a PCell issued by the network device;
numbering information of the target PSCell, where the numbering information includes a serial number of the target PSCell in a candidate PSCell list of the PCell reconfiguration completion message;
identification information of the target PSCell, where the identification information of the target PSCell is an identifier assigned to a candidate PSCell associated with the PCell by a network side node where the target PSCell is located, and the network side node includes an MN where the target PCell is located;
cell group identification information of a cell group where the target PSCell is located.

In a second aspect, an embodiment of the present disclosure provides an information processing method applied to a network device, the information processing method includes: receiving a PCell reconfiguration completion message transmitted by a user equipment, where the PCell reconfiguration completion message includes a PSCell reconfiguration completion message and indication information, where the indication information is used to indicate a target PSCell and/or a target SN where the target PSCell is located; determining the target SN according to the indication information; transmitting the PSCell reconfiguration completion message to the target SN.

In some optional implementations, the indication information includes at least one of the following:
cell identification information of the target PSCell;
frequency information of the target PSCell;
a reconfiguration identifier corresponding to the PCell reconfiguration completion message, where the reconfiguration identifier is the same as a reconfiguration identifier carried in a reconfiguration message for a PCell issued by the network device;
numbering information of the target PSCell, where the numbering information includes a serial number of the target PSCell in a candidate PSCell list of the PCell reconfiguration completion message;
identification information of the target PSCell, where the identification information of the target PSCell is an identifier assigned to a candidate PSCell associated with the PCell by a network side node where the target PSCell is located, and the network side node includes an MN where the target PCell is located;
cell group identification information of a cell group where the target PSCell is located.

In some optional implementations, when the indication information includes the cell identification information and/or the frequency information of the target PSCell, the determining the target SN according to the indication information includes: determining a PSCell indicated by the frequency information and/or the cell identification information as the target PSCell; determining a node where the target PSCell is located as the target SN.

In some optional implementations, when the indication information includes the reconfiguration identifier corresponding to the PCell reconfiguration completion message, the determining the target SN according to the indication information includes: determining, according to the reconfiguration identifier, a target reconfiguration message in the reconfiguration message for the PCell issued by the network device matching the reconfiguration identifier; determining a PSCell applied in a PSCell reconfiguration message contained in the target reconfiguration message as the target PSCell; determining a node where the target PSCell is located as the target SN.

In some optional implementations, when the indication information includes the numbering information of the target PSCell, the determining the target SN according to the indication information includes: determining, according to the numbering information, a PSCell in the candidate PSCell list which is at a same position as the numbering information as the target PSCell; determining a node where the target PSCell is located as the target SN.

In some optional implementations, when the indication information includes the identification information of the target PSCell, the determining the target SN according to the indication information includes: determining, according to the identification information of the target PSCell, a PSCell in a candidate PSCell list matching the target PSCell as the target PSCell; determining a node where the target PSCell is located as the target SN.

In some optional implementations, when the indication information includes the cell group identification information of the cell group where the target PSCell is located, the determining the target SN according to the indication information includes: acquiring the cell group identification information of the cell group where the target PSCell is located according to the indication information; determining, according to the cell group identification information, a cell group which is in a candidate cell group corresponding to the network device and of which cell group identification information is as same as the cell group identification information, determining an SN where the cell group is located as the target SN.

In some optional implementations, the information processing method further includes: transmitting a node release indication to a further SN, where the further SN does not comprise the target SN, and the node release indication is used to indicate the further SN to release a reserved resource.

In a third aspect, an embodiment of the present disclosure provides an information processing method applied to a user equipment, the information processing device includes a determining module, configured to determine a PCell reconfiguration completion message according to a target primary cell PCell and a target primary secondary cell PSCell which are to be switched, where the PCell reconfiguration completion message includes a PSCell reconfiguration completion message and indication information, and the indication information is used to indicate the target PSCell and/or a target secondary node SN where the target PSCell is located;
a transmitting module, configured to transmit the PCell reconfiguration completion message to a network device.

In some optional implementations, the indication information includes at least one of the following:
cell identification information of the target PSCell;
frequency information of the target PSCell;
a reconfiguration identifier corresponding to the PCell reconfiguration completion message, where the reconfiguration identifier is the same as a reconfiguration identifier carried in a reconfiguration message for a PCell issued by the network device;
numbering information of the target PSCell, where the numbering information includes a serial number of the target PSCell in a candidate PSCell list of the PCell reconfiguration completion message;
identification information of the target PSCell, where the identification information of the target PSCell is an identifier assigned to a candidate PSCell associated with the PCell by a network side node where the target PSCell is located, and the network side node includes an MN where the target PCell is located;
cell group identification information of a cell group where the target PSCell is located.

In a fourth aspect, an embodiment of the present disclosure provides an information processing method applied to a network device, the information processing device includes: a receiving module, configured to receive a PCell reconfiguration completion message transmitted by a user equipment, where the PCell reconfiguration completion message includes a PSCell reconfiguration completion message and indication information, where the indication information is used to indicate a target PSCell and/or a target SN where a target PSCell is located; a determining module, configured to determine the target SN according to the indication information; a transmitting module, configured to transmit the PSCell reconfiguration completion message to the target SN.

In some optional implementations, the indication information includes at least one of the following:
cell identification information of the target PSCell,
frequency information of the target PSCell,
a reconfiguration identifier corresponding to the PCell reconfiguration completion message, where the reconfiguration identifier is the same as a reconfiguration identifier carried in a reconfiguration message for a PCell issued by the network device,
numbering information of the target PSCell, where the numbering information includes a serial number of the target PSCell in a candidate PSCell list of the PCell reconfiguration completion message;
identification information of the target PSCell, where the identification information of the target PSCell is an identifier assigned to a candidate PSCell associated with the PCell by a network side node where the target PSCell is located, and the network side node includes an MN where the target PCell is located;
cell group identification information of a cell group where the target PSCell is located.

In some optional implementations, when the indication information includes the cell identification information and/or the frequency information of the target PSCell, the determining module is specifically configured to: determine a PSCell indicated by the frequency information and/or the cell identification information as the target PSCell; determine a node where the target PSCell is located as the target SN.

In some optional implementations, when the indication information includes the reconfiguration identifier corresponding to the PCell reconfiguration completion message, the determining module is specifically configured to: determine, according to the reconfiguration identifier, a target reconfiguration message in the reconfiguration message for the PCell issued by the network device matching the reconfiguration identifier; determine a PSCell applied in a PSCell reconfiguration message contained in the target reconfiguration message as the target PSCell; determine a node where the target PSCell is located as the target SN.

In some optional implementations, when the indication information includes the numbering information of the target PSCell, the determining module is specifically configured to: determine, according to the numbering information, a PSCell in the candidate PSCell list which is at a same position as the numbering information as the target PSCell; determine a node where the target PSCell is located as the target SN.

In some optional implementations, when the indication information includes the identification information of the target PSCell, the determining module is specifically configured to: determine, according to the identification information of the target PSCell, a PSCell in a candidate PSCell list matching the target PSCell as the target PSCell; determine a node where the target PSCell is located as the target SN.

In some optional implementations, when the indication information includes the cell group identification information of the cell group where the target PSCell is located, the determining module is specifically configured to: acquire the cell group identification information of the cell group where the target PSCell is located according to the indication information; determine, according to the cell group identification information, a cell group which is in a candidate cell group corresponding to the network device and of which cell group identification information is as same as the cell group identification information, determine an SN where the cell group is located as the target SN.

In some optional implementations, the transmitting module is further configured to: transmit a node release indication to a further SN, where the further SN does not comprise the target SN, and the node release indication is used to indicate the further SN to release a reserved resource.

In a fifth aspect, an embodiment of the present disclosure provides a user equipment including: a memory, configured to store a computer program;
a transceiver, configured to transmit and receive data under control of the processor;
a processor, configured to read the computer program from the memory and perform following operations:
   determining a PCell reconfiguration completion message according to a target primary cell PCell and a target primary secondary cell PSCell which are to be switched, where the PCell reconfiguration completion message includes a PSCell reconfiguration completion message and indication information, where the indication information is used to indicate the target PSCell and/or a target secondary node SN where the target PSCell is located; transmitting the PCell reconfiguration completion message to a network device.

In some optional implementations, the indication information includes at least one of the following:
cell identification information of the target PSCell;
frequency information of the target PSCell;
a reconfiguration identifier corresponding to the PCell reconfiguration completion message, where the reconfiguration identifier is the same as a reconfiguration identifier carried in a reconfiguration message for a PCell issued by the network device;
numbering information of the target PSCell, where the numbering information includes a serial number of the target PSCell in a candidate PSCell list of the PCell reconfiguration completion message;
identification information of the target PSCell, where the identification information of the target PSCell is an identifier assigned to a candidate PSCell associated with the PCell by a network side node where the target PSCell is located, and the network side node includes an MN where the target PCell is located;
cell group identification information of a cell group where the target PSCell is located.

In a sixth aspect, an embodiment of the present disclosure provides a network device including: a memory, configured to store a computer program; a transceiver, configured to transmit and receive data under control of a processor;
the processor, configured to read the computer program from the memory and perform following operations:
receiving a PCell reconfiguration completion message transmitted by a user equipment, where the PCell reconfiguration completion message includes a PSCell reconfiguration completion message and indication information, where the indication information is used to indicate a target PSCell and/or a target SN where a target PSCell is located; determining the target SN according to the indication information; transmitting the PSCell reconfiguration completion message to the target SN.

In some optional implementations, the indication information includes at least one of the following:
cell identification information of the target PSCell;
frequency information of the target PSCell;
a reconfiguration identifier corresponding to the PCell reconfiguration completion message, where the reconfiguration identifier is the same as a reconfiguration identifier carried in a reconfiguration message for a PCell issued by the network device;
numbering information of the target PSCell, where the numbering information includes a serial number of the target PSCell in a candidate PSCell list of the PCell reconfiguration completion message;
identification information of the target PSCell, where the identification information of the target PSCell is an identifier assigned to a candidate PSCell associated with the PCell by a network side node where the target PSCell is located, and the network side node includes an MN where the target PCell is located;
cell group identification information of a cell group where the target PSCell is located.

In some optional implementations, when the indication information includes the cell identification information and/or the frequency information of the target PSCell, the determining the target SN according to the indication information includes: determining a PSCell indicated by the frequency information and/or the cell identification information as the target PSCell; determining a node where the target PSCell is located as the target SN.

In some optional implementations, when the indication information includes the reconfiguration identifier corresponding to the PCell reconfiguration completion message, the determining the target SN according to the indication information includes: determining, according to the reconfiguration identifier, a target reconfiguration message in the reconfiguration message for the PCell issued by the network device matching the reconfiguration identifier; determining a PSCell applied in a PSCell reconfiguration message contained in the target reconfiguration message as the target PSCell, determining a node where the target PSCell is located as the target SN.

In some optional implementations, when the indication information includes the numbering information of the target PSCell, the determining the target SN according to the indication information includes: determining, according to the numbering information, a PSCell in the candidate PSCell list which is at a same position as the numbering information as the target PSCell; determining a node where the target PSCell is located as the target SN.

In some optional implementations, when the indication information includes the identification information of the target PSCell, the determining the target SN according to the indication information includes: determining, according to the identification information of the target PSCell, a PSCell in a candidate PSCell list matching the target PSCell as the target PSCell; determining a node where the target PSCell is located as the target SN.

In some optional implementations, when the indication information includes the cell group identification information of the cell group where the target PSCell is located, the determining the target SN according to the indication information includes: acquiring the cell group identification information of the cell group where the target PSCell is located according to the indication information; determining, according to the cell group identification information, a cell group which is in a candidate cell group corresponding to the network device and of which cell group identification information is as same as the cell group identification information; determining a node where the cell group is located as the target SN.

In some optional implementations, the processor is further configured to: transmit a node release indication to a further SN, where the further SN does not comprise the target SN, and the node release indication is used to indicate the further SN to release a reserved resource.

In a seventh aspect, an embodiment of the present disclosure provides a processor readable storage medium, where the processor readable storage medium stores a computer program, the computer program causes a processor to execute the information processing method as provided in any one of the first or second aspects.

In an eighth aspect, an embodiment of the present disclosure provides a computer program product including a computer program, when the computer program is executed by a processor, the information processing method as provided in any one of the first or second aspects is implemented.

In a ninth aspect, an embodiment of the present disclosure provides a communication system, including a user equipment as described in the fifth aspect and the network device as described in the sixth aspect.

The embodiment of the present disclosure provides an information processing method and apparatus, a device, and a storage medium, a PCell reconfiguration completion message is determined according to a target primary cell PCell and a target primary secondary cell PSCell which are to be switched, where the PCell reconfiguration completion message includes a PSCell reconfiguration completion message and indication information, and the indication information is used to indicate the target PSCell and/or a target secondary node SN where the target PSCell is located; a PCell reconfiguration completion message is transmitted to the network device. In the embodiments of the present disclosure, while transmitting the reconfiguration completion message, the identity of the target PSCell is indicated through an indication message, in this way, the target PCell can accurately transmit the PSCell reconfiguration completion message to the corresponding target PSCell, thereby further improving the reliability and robustness of mobile communication.

It should be understood that the content described in the above summary section is not intended to limit the key or important features of the embodiments of the present disclosure herein, nor is it intended to limit the scope of the present disclosure. The other features disclosed herein will become easily understood through the following description.

### BRIEF DESCRIPTION OF DRAWINGS

FIG. 1 is a schematic diagram of an application scenario provided by an embodiment of the present disclosure.
FIG. 2 is a schematic diagram of signaling interaction of an information processing method provided by an embodiment of the present disclosure.
FIG. 3 is a first structural diagram of an information processing apparatus provided by an embodiment of the present disclosure.
FIG. 4 is a second structural diagram of an information processing apparatus provided by an embodiment of the present disclosure.
FIG. 5 is a structural diagram of a user equipment provided by an embodiment of the present disclosure.
FIG. 6 is a structural diagram of a network device provided by an embodiment of the present disclosure.

### DESCRIPTION OF EMBODIMENTS

In this present disclosure, the term "and/or" describes the association relationship of the associated object, indicating that there can be three kinds of relations, for example, A and/or B, can represent: there is A alone, there is both A and B, and there is B alone. The character "/" generally indicates that the associated objects are in an "or" relationship. In the embodiments of the present disclosure, the term "multiple" means two or more, and other quantifiers are similar.

The technical solutions in the embodiments of the present disclosure will be clearly and comprehensively described with reference to the accompanying drawings of the embodiments of the present disclosure. The described embodiments are merely a part rather than all embodiments of the present disclosure. All other embodiments obtained by persons of ordinary skill in the art based on the embodiments of the present disclosure without paying creative effort shall fall within the protection scope of the present disclosure.

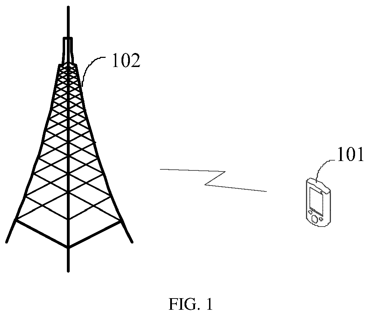

Next, the application scenario of the embodiments of the present disclosure is illustrated in conjunction with FIG. 1. FIG. 1 is a schematic diagram of an application scenario provided by an embodiment of the present disclosure. As shown in FIG. 1, this scenario includes a user equipment 101 (UE) and a network device 102.

It should be noted that the above FIG. 1 is illustrative, and the above scenario can also include other network devices, such as wireless relay devices and wireless backhaul devices, which are not shown in FIG. 1. In the embodiments of the present disclosure, the above scenario including one UE and one network device is taken as an example, but is not limited thereto.

In different systems, the name of the UE may also be different, for example, the terminal may also be a wireless terminal, where the wireless terminal can communicate with one or more core networks (Core Network, CN) through a radio access network (Radio Access Network, RAN), the wireless terminal may be a mobile terminal, such as a mobile phone (or "cellular" phone), and a computer with mobile terminal, such as a portable, pocket, handheld, computer built-in or vehicle-mounted mobile device, which exchange language and/or data with the wireless access network. For example, a personal communication service (Personal Communication Service, PCS) phone, a cordless phones, a session initiated protocol (Session Initiated Protocol, SIP) phone, a wireless local loop (Wireless Local Loop, WLL) station, a personal digital assistant (Personal Digital Assistant, PDA) and other devices. The wireless terminal can also be called a system, a subscriber unit (subscriber unit), a subscriber station (subscriber station), a mobile station (mobile station), a mobile platform (mobile), a remote station (remote station), an access point (access point), a remote terminal (remote terminal), an access terminal (access terminal), a user terminal (user terminal), a user agent (user agent), and a user device (user device), which is not limited in the embodiments of the present disclosure.

Among them, the above network device can be a master node (Master Node, MN), specifically can be a base transceiver station (Base Transceiver Station, BTS for short) and/or a base station controller in a Global System of Mobile communication (Global System of Mobile communication, GSM for short) or Code Division Multiple Access (Code Division Multiple Access, CDMA for short), it can also be a base station (NodeB, NB for short) and/or radio network controller (Radio Network Controller, RNC for short) in Wideband Code Division Multiple Access (Wideband Code Division Multiple Access, WCDMA for short), it can also be an Evolutional Node B (Evolutional Node B, referred to as 4G base station or eNodeB for short) in Long Term Evolution (Long Term Evolution, LTE for short), or a relay station or access point, or a base station (5G base station) in a future 5G network, etc., which is not limited in the embodiments of the present disclosure.

In related technologies, in order to improve the robustness and reliability of mobile communication, conditional handover and PSCell condition change within an SN without MN participation have been introduced in R16. The conditional PSCell change and conditional PSCell addition between SNs have been introduced in R17.

Whether it is conditional handover (Conditional Handover, CHO for short), the PSCell condition change within SN, or conditional PSCell change or conditional PSCell addition between SNs, the main idea is that the network device preconfigures multiple candidate cells for UE, that is, transmits configuration information and an execution condition of the candidate cells to the UE in advance.

Correspondingly, after receiving configuration information of a target cell, UE will not immediately perform handover or the conditional PSCell change or the conditional PSCell addition as in the traditional scheme, instead, UE will save the received configuration and perform measurement and evaluation on the configured candidate cells until there is a cell that satisfies the execution condition, and then UE executes the stored configuration information corresponding to the cell, performs the corresponding handover or conditional PSCell change or conditional PSCell addition process, that is, completes the downlink synchronization and triggers a random access process to access to the target PCell or target PSCell.

R16 only supports a network device configuring CHO or "Conditional PSCell Addition or Change (Conditional PSCell Addition or Change, CPAC)" for UE alone. That is, when CHO is configured for UE, UE only determines whether the PCell switching condition is met and performs the corresponding PCell switching process, that is, the PCell switching process is not accompanied by PSCell change addition; or when CPAC is configured, UE only determines whether the execution condition for PSCell addition or change is met, and only performs the corresponding PSCell addition or change process, that is, the PSCell addition or change process is not accompanied by the PCell switching process.

Similarly, in R18, the network device can preconfigure multiple candidate PCell cells for UE, and each candidate PCell cell is associated with multiple candidate PSCell cells, that is, the configuration information and execution conditions of the candidate PCell cell and its corresponding candidate PSCell cell are transmitted to UE in advance.

After receiving the configuration information, UE will not immediately perform PCell, PSCell addition or PSCell switching, instead, UE will save the received configuration and perform measurement and evaluation on the configured candidate cells until there is a cell that satisfies the execution condition, and select a candidate PCell cell that meets the execution condition as the target PCell cell, and select a candidate PSCell cell corresponding to the candidate PCell cell as the target PSCell cell, and then UE triggers the execution of conditional handover and feedbacks a PCell reconfiguration completion message containing a PSCell reconfiguration completion message to the target PCell.

However, the inventor finds that because a target PCell cell may correspond to multiple candidate PSCell cells, the target PCell cannot determine the target PSCell cell selected by the UE upon receiving the PCell reconfiguration completion message, as a result, the target PCell cannot feedback the PSCell reconfiguration completion message to the target PSCell cell, and cannot provide corresponding services for UE through the target PSCell cell.

In view of this, the embodiments of the present disclosure provide an information processing method and apparatus, a device, and a storage medium, a PCell reconfiguration completion message is determined according to a target primary cell PCell and a target primary secondary cell PSCell which are to be switched, where the PCell reconfiguration completion message includes a PSCell reconfiguration completion message and indication information, and the indication information is used to indicate the target PSCell and/or a target secondary node SN where the target PSCell is located; a PCell reconfiguration completion message is transmitted to the network device. In the embodiments of the present disclosure, while transmitting the reconfiguration completion message, the identity of the target PSCell is indicated through an indication message, in this way, the target PCell can accurately transmit the PSCell reconfiguration completion message to the corresponding target PSCell, thereby further improving the reliability and robustness of mobile communication.

The following are specific embodiments of the technical scheme of the embodiments of the present disclosure and how the technical scheme of the present disclosure solves the above technical problem in detail. The following specific embodiments may be combined with each other, and the same or similar concepts or processes may not be repeated in some embodiments.

It should be understood that the technical solution provided by the embodiments of the present disclosure can be applied to a variety of systems, such as 5G system. For example, the applicable system can be a global system of mobile communication (global system of mobile communication, GSM), a code division multiple access (code division multiple access, CDMA) system, a wideband code division multiple access (Wideband Code Division Multiple Access, WCDMA) general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A for short), a universal mobile telecommunication system (universal mobile telecommunication system, UMTS), a worldwide interoperability for microwave access (worldwide interoperability for microwave access, WiMAX) system, a 5G New Radio (New Radio, NR) system, etc. These systems include terminals and network devices. The system also includes core network parts, such as an evolved packet system (Evloved Packet System, EPS), a 5G system (5GS), and so on.

It should be understood that the method and apparatus provided in the embodiments of the present disclosure are based on the same application conception, and since the principles following which the method and apparatus solve the problem are similar, reference can be made to each other for the implementations of the apparatus and method, which will not be repeated for brevity.

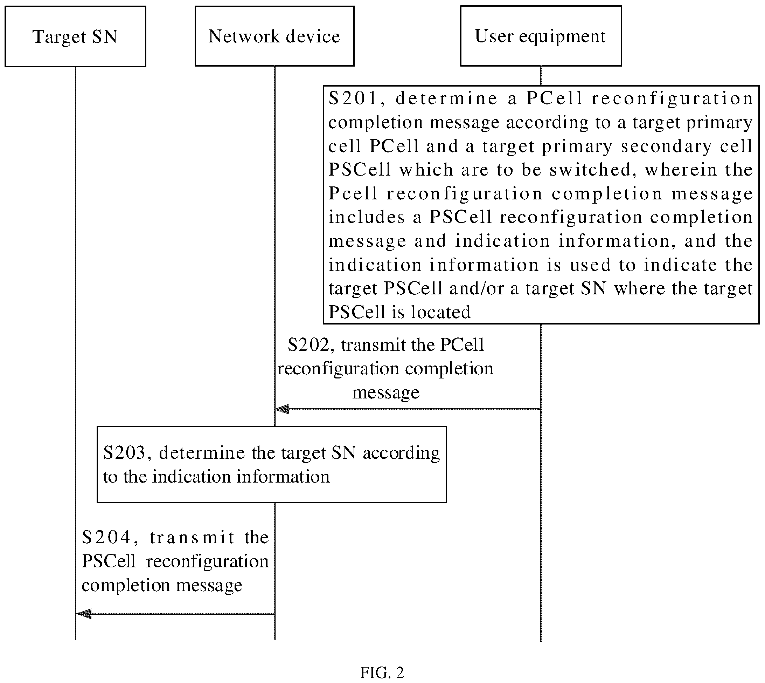

FIG. 2 is a schematic diagram of signaling interaction of an information processing method provided by an embodiment of the present disclosure. It should be noted that the user equipment in the embodiments of the present disclosure can be UE in the above scenario, and the network device can be MN in the above scenario.

As shown in FIG. 2, the information processing method provided by the embodiment of the present disclosure includes the following steps.

S201. The user equipment determines a PCell reconfiguration completion message according to a target primary cell PCell and a target primary secondary cell PSCell which are to be switched.

It should be noted that in the embodiment of the present disclosure, the way in which the user equipment determines the target PCell and target PSCell to be switched is not limited. For example, a network device can preconfigure multiple candidate PCells for UE, associate multiple candidate PSCells with each candidate PCell, and transmit configuration information and execution conditions of the candidate PCells and the candidate PSCells corresponding to each candidate PCell to UE.

Accordingly, UE will measure and evaluate the configured candidate PCells until there is a cell that satisfies the execution condition(s), and then UE will select the candidate PCell that meets the condition(s) and the candidate PSCells corresponding to the candidate PCell as the target PCell and target PSCells.

Further, the UE determines the reconfiguration completion message based on the target PCell and target PSCells.

The PCell reconfiguration completion message includes a PSCell reconfiguration completion message and indication information, and the indication information is used to indicate the target PSCell and/or the target secondary node SN where the target PSCell is located.

S202. The user equipment transmits the PCell reconfiguration completion message to the network device.

S203. The network device determines the target SN according to the indication information.

It should be noted that when the indication information is used to indicate the target PSCell, the SN where the target PSCell is located is the target SN, and the types of the indication information and the determination method of the target SN corresponding to each type of indication information will be shown in subsequent embodiments.

S204. The network device transmits the PSCell reconfiguration completion message to the target SN.

In the embodiment of the present disclosure, the user equipment, while transmitting the reconfiguration completion message to the network device, indicates the identity of the target PSCell through the indication information, so that the target PCell can accurately transmit the PSCell reconfiguration completion message to the corresponding target PSCell, thus further improving the reliability and robustness of mobile communication.

In some embodiments, the indication information includes at least one of the following.
(1) Cell identification information of the target PSCell.
(2) Frequency information of the target PSCell.
(3) Reconfiguration identifier corresponding to the PCell reconfiguration completion message.
   where the reconfiguration identifier is the same as a reconfiguration identifier carried in a reconfiguration message for a PCell issued by the network device, and the network device (MN) ensures that different PCell reconfiguration messages on the same MN node correspond to different reconfiguration identifiers.
(4) Numbering information of the target PSCell.
   where the numbering information includes a serial number of the target PSCell in a candidate PSCell list of the PCell reconfiguration completion message.
(5) Identification information of the target PSCell.
   where the identification information of the target PSCell is an identifier assigned for candidate PSCell(s) associated with the PCell by a network side node where the target PSCell is located, the network side node includes the MN where the target PCell is located. For the same PCell, different candidate PSCells associated with the PCell have unique identifiers.
(6) Cell group identification information of a cell group where the target PSCell is located.

Next, the above step S203 will be explained in detail for the different types of indication information mentioned above.

In the first example, when the indication information includes the cell identification information and/or the frequency information of the target PSCell, the above step S203 specifically includes:
I, determining a PSCell indicated by the frequency information and/or the cell identification information as the target PSCell;
II, determining a node where the target PSCell resides as the target SN.

In the second example, when the indication information includes the reconfiguration identifier corresponding to the PCell reconfiguration completion message, the above step S203 specifically includes:
I, determining, according to the reconfiguration identifier, a target reconfiguration message which is in the reconfiguration message for the PCell issued by the network device and matches the reconfiguration identifier;
II, determining a PSCell applied in a PSCell reconfiguration message contained in the target reconfiguration message as the target PSCell;
III, determining a node where the target PSCell resides as the target SN.

Specifically, querying, according to the reconfiguration identifier contained in the PCell reconfiguration completion message, the reconfiguration information reserved at the network device side and containing the same reconfiguration identifier, and using a PSCell applied by an SCG reconfiguration message (equivalent to the PSCell reconfiguration message in this example) contained in the reconfiguration message as its target PSCell.

In the third example, when the indication information includes the numbering information of the target PSCell, the above step S203 specifically includes:
I, determining, according to the numbering information, a PSCell in the candidate PSCell list which is at a same position as the numbering information as the target PSCell;
II, determining a node where the target PSCell resides as the target SN.

Specifically, querying, according to the numbering information of the target PSCell contained in the PCell reconfiguration completion message, the candidate PSCell list contained in the PCell reconfiguration message reserved by the network device, and determining the candidate PSCell in the list corresponding to the numbering information as the target PSCell.

In the fourth example, when the indicator information includes the identification information of the target PSCell, the identification information of the target PSCell is the identifier assigned to the candidate PSCell associated with the PCell by the network side node where the target PCell resides, where the network side node can be the target MN where the target PCell is located.

Specifically, the above steps S203 include:
I, determining, according to the numbering information of the target PSCell, a PSCell which is in a candidate PSCell list and matches the target PSCell as the target PSCell;
II, determining a node where the target PSCell resides as the target SN.

In the fifth example, when the indication information includes the cell group identification information of the cell group where the target PSCell is located, the above step S203 specifically includes:
I, acquiring the cell group identification information of the cell group where the target PSCell is located according to the indication information;
II, determining, according to the cell group identification information, a cell group which is in candidate cell group(s) corresponding to the network device and of which cell group identification information is as same as the cell group identification information;
III, determining an SN where the cell group resides as the target SN.

Specifically, querying, according to the cell group identification information contained in the PCell reconfiguration completion message, the candidate SCG cell group(s) contained in the PCell reconfiguration message reserved by the network device side, and using the node where the cell group having the same cell group identification information resides as the target SN.

**In** some alternative embodiments, after the above step S204, the network device may also perform the following steps: transmitting a node release indication to further SN(s), where the further SN(s) does not include the target SN, and the node release indication is used to indicate the further SN(s) to release reserved resource(s).

Correspondingly, the target SN where the target PSCell cell resides confirms the successful switch for the target PSCell after receiving the PSCell reconfiguration completion message forwarded by the network device, and releases other preconfigured candidate PSCell cell(s) for the node.

**In** the present embodiment, by providing different types of indication information, the scheme in the embodiments of the present disclosure can be flexibly applied to different communication scenarios, so as to meet switching requirements of PSCell cells in different communication scenarios and ensure the reliability and robustness of the communication scenarios.

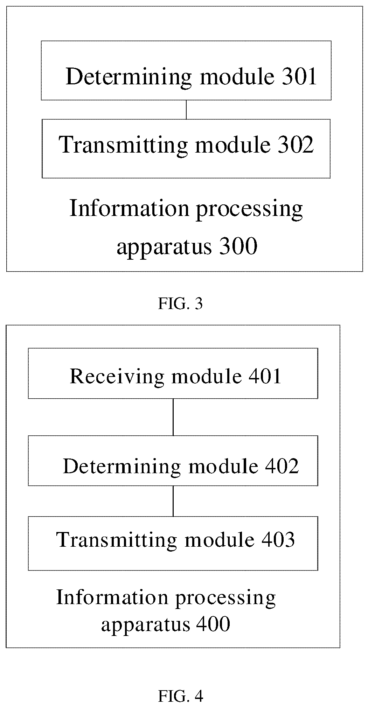

An embodiment of the present disclosure provides an information processing apparatus applied to a user equipment. FIG. 3 is a first structural diagram of an information processing apparatus provided by an embodiment of the present disclosure. As shown in FIG. 3, the information processing apparatus 300 includes:
a determining module 301, configured to determine a PCell reconfiguration completion message according to a target primary cell PCell and a target primary secondary cell PSCell which are to be switched, where the PCell reconfiguration completion message includes a PSCell reconfiguration completion message and indication information and the indication information is used to indicate the target PSCell and/or a target secondary node SN where the target PSCell is located; a transmitting module 302, configured to transmit the PCell reconfiguration completion message to a network device.

In some alternative embodiments, the indication information includes at least one of the following:
cell identification information of the target PSCell;
frequency information of the target PSCell;
a reconfiguration identifier corresponding to the PCell reconfiguration completion message, where the reconfiguration identifier is the same as a reconfiguration identifier carried in a reconfiguration message for a PCell issued by the network device;
numbering information of the target PSCell, where the numbering information includes a serial number of the target PSCell in a candidate PSCell list of the PCell reconfiguration completion message;
identification information of the target PSCell, where the identification information of the target PSCell is an identifier assigned to a candidate PSCell associated with the PCell by a network side node where the target PSCell is located, and the network side node includes an MN where the target PCell is located;
cell group identification information of a cell group where the target PSCell is located.

It should be noted here that the information processing apparatus 300 provided herein is capable of implementing the steps of the information processing method corresponding to the user equipment in the method embodiments mentioned above, and can achieve the same technical effects, and the parts and beneficial effects same as the method embodiments are not detailed here for brevity.

An embodiment of the present disclosure also provides an information processing apparatus applied to a network device. FIG. 4 is a second structural diagram of an information processing apparatus provided by an embodiment of the present disclosure. As shown in FIG. 4, the information processing apparatus 400 includes: a receiving module 401, configured to receive a PCell reconfiguration completion message transmitted by a user equipment, where the PCell reconfiguration completion message includes a PSCell reconfiguration completion message and indication information, where the indication information is used to indicate a target PSCell and/or a target SN where a target PSCell is located; a determining module 402, configured to determine the target SN according to the indication information; a transmitting module 403, configured to transmit the PSCell reconfiguration completion message to the target SN.

In some optional embodiments, the indication information includes at least one of the following:
cell identification information of the target PSCell,
frequency information of the target PSCell,
a reconfiguration identifier corresponding to the PCell reconfiguration completion message, where the reconfiguration identifier is the same as a reconfiguration identifier carried in a reconfiguration message for a PCell issued by the network device,
numbering information of the target PSCell, where the numbering information includes a serial number of the target PSCell in a candidate PSCell list of the PCell reconfiguration completion message;
identification information of the target PSCell, where the identification information of the target PSCell is an identifier assigned to a candidate PSCell associated with the PCell by a network side node where the target PSCell is located, and the network side node includes an MN where the target PCell is located;
cell group identification information of a cell group where the target PSCell is located.

In some optional implementations, when the indication information includes the cell identification information and/or the frequency information of the target PSCell, the determining module 402 is specifically configured to: determine a PSCell indicated by the frequency information and/or the cell identification information as the target PSCell; determine a node where the target PSCell is located as the target SN.

In some optional implementations, when the indication information includes the reconfiguration identifier corresponding to the PCell reconfiguration completion message, the determining module 402 is specifically configured to: determine, according to the reconfiguration identifier, a target reconfiguration message in the reconfiguration message for the PCell issued by the network device matching the reconfiguration identifier; determine a PSCell applied in a PSCell reconfiguration message contained in the target reconfiguration message as the target PSCell; determine a node where the target PSCell is located as the target SN.

In some optional implementations, when the indication information includes the numbering information of the target PSCell, the determining module is specifically configured to: determine, according to the numbering information, a PSCell in the candidate PSCell list which is at a same position as the numbering information as the target PSCell; determine a node where the target PSCell is located as the target SN.

In some optional implementations, when the indication information includes the identification information of the target PSCell, the determining module 402 is specifically configured to: determine, according to the identification information of the target PSCell, a PSCell in a candidate PSCell list matching the target PSCell as the target PSCell; determine a node where the target PSCell is located as the target SN.

In some optional implementations, when the indication information includes the cell group identification information of the cell group where the target PSCell is located, the determining module 402 is specifically configured to: acquire the cell group identification information of the cell group where the target PSCell is located according to the indication information; determine, according to the cell group identification information, a cell group which is in a candidate cell group corresponding to the network device and of which cell group identification information is as same as the cell group identification information, determine an SN where the cell group is located as the target SN.

In some optional implementations, the transmitting module 403 is further configured to: transmit a node release indication to a further SN, where the further SN does not comprise the target SN, and the node release indication is used to indicate the further SN to release a reserved resource.

It should be noted here that the information processing apparatus 400 provided herein is capable of implementing the steps of the information processing method corresponding to the network device in the method embodiments mentioned above, and can achieve the same technical effect, and the parts and beneficial effects same as the method embodiments are not detailed here for brevity.

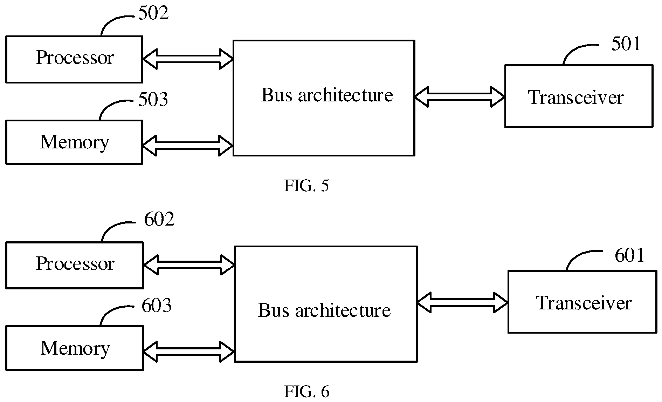

An embodiment of the present disclosure also provides a user equipment. FIG. 5 is a structural diagram of a user equipment provided by an embodiment of the present disclosure. As shown in FIG. 5, the user equipment 500 includes a transceiver 501, a processor 502, and a memory 503.

The transceiver 501 is configured to transmit and receive data under control of the processor 502. Among them, in FIG. 5, the bus architecture may include any number of interconnected buses and bridges, specifically one or more processors represented by the processor 502 and various circuits of a memory represented by the memory 503 connected together. The bus architecture can also link various other circuits such as peripheral devices, voltage regulators, and power management circuits together, which are well known in the field and are therefore not described further in this article. The bus interface provides interfaces. The transceiver 501 can be multiple components, including a transmitter and a receiver, providing a unit for communicating with various other devices over transmission mediums, the transmission mediums include wireless channels, wired channels, optical cables, and other transmission mediums. The processor 502 is responsible for managing the bus architecture and usual processing, while the memory 503 can store data used by the processor 502 when performing operations.

The processor 502 is responsible for managing the bus architecture and general processing, and the memory 503 can store the data used by the processor 502 when performing operations. Optionally, the processor 502 can be a central processing unit (central processing unit, CPU) or an application specific integrated circuit (Application Specific Integrated Circuit, ASIC), a field-programmable gate array (Field-Programmable Gate Array, FPGA), or a complex programmable logic device (Complex Programmable Logic Device, CPLD), the processor can also be with a multicore architecture. The processor 502 may execute, in accordance with the executable instructions obtained, any one of the methods provided in the embodiments of the present disclosure related to the terminal device by invoking a computer program stored in the memory 503. The processor may also be physically separated from the memory.

Specifically, the processor 502 is configured to read the computer program from the memory and perform the following operations: determining a PCell reconfiguration completion message according to a target primary cell PCell and a target primary secondary cell PSCell which are to be switched, where the PCell reconfiguration completion message includes a PSCell reconfiguration completion message and indication information, where the indication information is used to indicate the target PSCell and/or a target secondary node SN where the target PSCell is located; transmitting the PCell reconfiguration completion message to a network device.

In some optional implementations, the indication information includes at least one of the following:
cell identification information of the target PSCell;
frequency information of the target PSCell;
a reconfiguration identifier corresponding to the PCell reconfiguration completion message, where the reconfiguration identifier is the same as a reconfiguration identifier carried in a reconfiguration message for a PCell issued by the network device;
numbering information of the target PSCell, where the numbering information includes a serial number of the target PSCell in a candidate PSCell list of the PCell reconfiguration completion message;
identification information of the target PSCell, where the identification information of the target PSCell is an identifier assigned to a candidate PSCell associated with the PCell by a network side node where the target PSCell is located, and the network side node includes an MN where the target PCell is located.

An embodiment of the present disclosure also provides a network device. FIG. 6 is a structural diagram of a network device provided by an embodiment of the present disclosure. As shown in FIG. 6, the network device 600 includes a transceiver 601, a processor 602, and a memory 603.

The transceiver 601 is configured to transmit and receive data under control of the processor 602. Among them, in FIG. 6, the bus architecture may include any number of interconnected buses and bridges, specifically one or more processors represented by the processor 602 and various circuits of a memory represented by the memory 603 connected together. The bus architecture can also link various other circuits such as peripheral devices, voltage regulators, and power management circuits together, which are well known in the field and are therefore not described further in this article. The bus interface provides interfaces. The transceiver 601 can be multiple components, including a transmitter and a receiver, providing a unit for communicating with various other devices over transmission mediums, the transmission mediums include wireless channels, wired channels, optical cables, and other transmission mediums. The processor 602 is responsible for managing the bus architecture and usual processing, while the memory 603 can store data used by the processor 602 when performing operations.

The processor 602 is responsible for managing the bus architecture and general processing, and the memory 603 can store the data used by the processor 602 when performing operations. Optionally, the processor 602 can be a central processing unit (central processing unit, CPU) or an application specific integrated circuit (Application Specific Integrated Circuit, ASIC), a field-programmable gate array (Field-Programmable Gate Array, FPGA), or a complex programmable logic device (Complex Programmable Logic Device, CPLD), the processor can also be with a multicore architecture. The processor 602 may execute, in accordance with the executable instructions obtained, any one of the methods provided in the embodiments of the present disclosure related to the terminal device by invoking a computer program stored in the memory 603. The processor may also be physically separated from the memory.

In some embodiments, the processor 602 is configured to read the computer program from the memory and perform following operations: receiving a PCell reconfiguration completion message transmitted by a user equipment, where the PCell reconfiguration completion message includes a PSCell reconfiguration completion message and indication information, where the indication information is used to indicate a target PSCell and/or a target SN where a target PSCell is located; determining the target SN according to the indication information; transmitting the PSCell reconfiguration completion message to the target SN.

In some optional implementations, the indication information includes at least one of the following:
cell identification information of the target PSCell;
frequency information of the target PSCell;
a reconfiguration identifier corresponding to the PCell reconfiguration completion message, where the reconfiguration identifier is the same as a reconfiguration identifier carried in a reconfiguration message for a PCell issued by the network device;
numbering information of the target PSCell, where the numbering information includes a serial number of the target PSCell in a candidate PSCell list of the PCell reconfiguration completion message;
identification information of the target PSCell, where the identification information of the target PSCell is an identifier assigned to a candidate PSCell associated with the PCell by a network side node where the target PSCell is located, and the network side node includes an MN where the target PCell is located;
cell group identification information of a cell group where the target PSCell is located.

In some optional implementations, when the indication information includes the cell identification information and/or the frequency information of the target PSCell, the determining the target SN according to the indication information includes: determining a PSCell indicated by the frequency information and/or the cell identification information as the target PSCell; determining a node where the target PSCell is located as the target SN.

In some optional implementations, when the indication information includes the reconfiguration identifier corresponding to the PCell reconfiguration completion message, the determining the target SN according to the indication information includes: determining, according to the reconfiguration identifier, a target reconfiguration message in the reconfiguration message for the PCell issued by the network device matching the reconfiguration identifier; determining a PSCell applied in a PSCell reconfiguration message contained in the target reconfiguration message as the target PSCell, determining a node where the target PSCell is located as the target SN.

In some optional implementations, when the indication information includes the numbering information of the target PSCell, the determining the target SN according to the indication information includes: determining, according to the numbering information, a PSCell in the candidate PSCell list which is at a same position as the numbering information as the target PSCell; determining a node where the target PSCell is located as the target SN.

In some optional implementations, when the indication information includes the identification information of the target PSCell, the determining the target SN according to the indication information includes: determining, according to the identification information of the target PSCell, a PSCell in a candidate PSCell list matching the target PSCell as the target PSCell; determining a node where the target PSCell is located as the target SN.

In some optional implementations, when the indication information includes the cell group identification information of the cell group where the target PSCell is located, the determining the target SN according to the indication information includes: acquiring the cell group identification information of the cell group where the target PSCell is located according to the indication information; determining, according to the cell group identification information, a cell group which is in a candidate cell group corresponding to the network device and of which cell group identification information is as same as the cell group identification information; determining a node where the cell group is located as the target SN.

In some optional implementations, the processor 602 is further configured to: transmit a node release indication to a further SN, where the further SN does not comprise the target SN, and the node release indication is used to indicate the further SN to release a reserved resource.

It should be noted here that the above network device provided herein can implement all the method steps correspondingly implemented by the network device in the above method embodiments, and can achieve the same technical effects, and the parts and beneficial effects same as the method embodiments are not detailed here for brevity.

It should be noted that the division of units in the embodiments of the present disclosure is illustrative and is only a logical function division, and there can be other division methods in actual implementation. In addition, the functional units in various embodiments of the present disclosure may be integrated in a single processing unit, the units may exist physically separately, or two or more units may be integrated in a single unit. The integrated unit can be implemented either in the form of hardware or in the form of software functional unit.

If the integrated unit mentioned above is implemented in the form of software functional unit and sold or used as a stand-alone product, it can be stored in a processor-readable storage medium. Based on this understanding, essence of the technical solution of the present disclosure, a portion of which that contributes to the existing technology, or all or part of the technical solution can be embodied in the form of a software product, which is stored in a storage medium and includes several instructions for a computer device (which can be a personal computer, server, or network device, etc.) or processor to execute all or part of the steps of the method in the various embodiments of the present disclosure. The aforementioned storage medium includes various mediums that can store program codes, such as a USB flash drive, a portable hard drive, a read only memory (Read Only Memory, ROM), a random access memory (Random Access Memory, RAM), a magnetic disk or an optical disk.

An embodiment of the present disclosure provides a processor-readable storage medium which stores a computer program, the computer program is used to enable a processor to execute the information processing method provided by the embodiments of the present disclosure, so that the processor can implement all the steps of the information processing method implemented by the user equipment or network device in the above method embodiments, and achieve the same technical effects. The parts and beneficial effects same as the method embodiments will not be detailed here. Among them, the processor-readable storage medium may be any available medium or data storage device that the processor can access, including but not limited to a magnetic storage (such as floppy disk, hard disk, magnetic tape, magneto-optical disk (MO) and the like), an optical storage (such as CD, DVD, BD, HVD and the like), and a semiconductor storage (such as ROM, EPROM, EEPROM, non-volatile memory (NAND FLASH), a solid state drive (SSD), and the like).

An embodiment of the present disclosure also provides a computer program product including instructions, where the computer program is stored in a storage medium, and at least one processor can read the computer program from the storage medium. When the at least one processor executes the computer program, all the steps of the information processing methods implemented by the network device or user device in the above method embodiments can be implemented, and the same technical effects can be achieved. Therefore, the parts and beneficial effects same as the method embodiments will not be detailed here.

An embodiment of the present disclosure also provides a communication system including a network device and a user equipment. Among them, the network device and the user equipment can perform the corresponding steps in the above embodiments of the information processing method, and the same technical effects can be achieved. Therefore, the parts and beneficial effects same as the method embodiments will not be detailed here.

Persons skilled in the art should understand that embodiments of the present disclosure may be provided as methods, systems, or computer program products. Therefore, the present disclosure can take the form of a fully hardware implementation, a fully software implementation, or a combination of software and hardware implementation. Moreover, the present disclosure may take the form of a computer program product implemented on one or more computer usable storage mediums (including but not limited to disk storage and optical storage) containing computer usable program codes.

The present disclosure is described with reference to signaling interaction diagrams and/or block diagrams of methods, apparatus, and computer program products in accordance with the embodiments of the present disclosure. It should be understood that each process and/or block in the signaling interaction diagram and/or block diagram, as well as the combination of processes and/or blocks in the signaling interaction diagram and/or block diagram, can be implemented by computer executable instructions. These computer executable instructions can be provided to the processor of a general-purpose computer, a specialized computer, an embedded processor, or other programmable data processing devices to generate a machine that enables the instructions executed by the processors of the computer or other programmable data processing devices to produce a means for implementing the functions specified in one or more processes in the signaling interaction diagram and/or one or more blocks in the block diagram. These processor executable instructions can also be stored in a processor readable memory that can guide a computer or other programmable data processing devices to operate in a specific manner, such that the instructions stored in the processor readable memory generate a manufactured product including instruction means that implement the functions specified in one or more processes in the signaling interaction diagram and/or one or more blocks in the block diagram.

These processor executable instructions may also be loaded onto a computer or other programmable data processing device, enabling a series of operational steps to be performed on the computer or other programmable device to produce computer-implemented processing. The instructions executed on the computer or other programmable device provide steps for implementing the functions specified in one or more processes in the signaling interaction diagram and/or one or more blocks in the block diagram.

Obviously, persons skilled in the art may make various changes and variations to the present disclosure without departing from the spirit and scope of the present disclosure. In this way, if these changes and variations disclosed herein fall within the scope of the claims and their equivalent technologies, then the present disclosure is also intended to include these modifications and variations.

## Claims

1. An information processing method, **characterized by** being applied to a user equipment and comprising:
determining a PCell reconfiguration completion message according to a target primary cell PCell and a target primary secondary cell PSCell which are to be switched, wherein the PCell reconfiguration completion message comprises a PSCell reconfiguration completion message and indication information, wherein the indication information is used to indicate the target PSCell and/or a target secondary node SN where the target PSCell is located;
transmitting the PCell reconfiguration completion message to a network device.

2. The information processing method according to claim 1, wherein the indication information comprises at least one of the following:
cell identification information of the target PSCell;
frequency information of the target PSCell;
a reconfiguration identifier corresponding to the PCell reconfiguration completion message, wherein the reconfiguration identifier is the same as a reconfiguration identifier carried in a reconfiguration message for a PCell issued by the network device;
numbering information of the target PSCell, wherein the numbering information comprises a serial number of the target PSCell in a candidate PSCell list of the PCell reconfiguration completion message;
identification information of the target PSCell, wherein the identification information of the target PSCell is an identifier assigned to a candidate PSCell associated with the PCell by a network side node where the target PSCell is located, and the network side node comprises a master node MN where the target PCell is located;
cell group identification information of a cell group where the target PSCell is located.

3. An information processing method, **characterized by** being applied to a network device and comprising:
receiving a PCell reconfiguration completion message transmitted by a user equipment, wherein the PCell reconfiguration completion message comprises a PSCell reconfiguration completion message and indication information, wherein the indication information is used to indicate a target PSCell and/or a target SN where a target PSCell is located;
determining the target SN according to the indication information;
transmitting the PSCell reconfiguration completion message to the target SN.

4. The information processing method according to claim 3, wherein the indication information comprises at least one of the following:
cell identification information of the target PSCell;
frequency information of the target PSCell;
a reconfiguration identifier corresponding to the PCell reconfiguration completion message, wherein the reconfiguration identifier is the same as a reconfiguration identifier carried in a reconfiguration message for a PCell issued by the network device;
numbering information of the target PSCell, wherein the numbering information comprises a serial number of the target PSCell in a candidate PSCell list of the PCell reconfiguration completion message;
identification information of the target PSCell, wherein the identification information of the target PSCell is an identifier assigned to a candidate PSCell associated with the PCell by a network side node where the target PSCell is located, and the network side node comprises an MN where the target PCell is located;
cell group identification information of a cell group where the target PSCell is located.

5. The information processing method according to claim 3, wherein when the indication information comprises the cell identification information and/or the frequency information of the target PSCell, the determining the target SN according to the indication information comprises:
determining a PSCell indicated by the frequency information and/or the cell identification information as the target PSCell;
determining a node where the target PSCell is located as the target SN.

6. The information processing method according to claim 3, wherein when the indication information comprises the reconfiguration identifier corresponding to the PCell reconfiguration completion message, the determining the target SN according to the indication information comprises:
determining, according to the reconfiguration identifier, a target reconfiguration message in the reconfiguration message for the PCell issued by the network device matching the reconfiguration identifier;
determining a PSCell applied in a PSCell reconfiguration message contained in the target reconfiguration message as the target PSCell;
determining a node where the target PSCell is located as the target SN.

7. The information processing method according to claim 3, wherein when the indication information comprises the numbering information of the target PSCell, the determining the target SN based on the indication information comprises:
determining, according to the numbering information, a PSCell in the candidate PSCell list which is at a same position as the numbering information as the target PSCell;
determining a node where the target PSCell is located as the target SN.

8. The information processing method according to claim 3, wherein when the indication information comprises the identification information of the target PSCell, the determining the target SN based on the indication information comprises:
determining, according to the identification information of the target PSCell, a PSCell in a candidate PSCell list matching the target PSCell as the target PSCell;
determining a node where the target PSCell is located as the target SN.

9. The information processing method according to claim 3, wherein when the indication information comprises the cell group identification information of the cell group where the target PSCell is located, the determining the target SN according to the indication information comprises:
acquiring the cell group identification information of the cell group where the target PSCell is located according to the indication information;
determining, according to the cell group identification information, a cell group which is in a candidate cell group corresponding to the network device and of which cell group identification information is as same as the cell group identification information;
determining an SN where the cell group is located as the target SN.

10. The information processing method according to any one of claims 3 to 9, further comprising:
transmitting a node release indication to a further SN, wherein the further SN does not comprise the target SN, and the node release indication is used to indicate the further SN to release a reserved resource.

11. An information processing apparatus, **characterized by** being applied to a user equipment and comprising:
a determining module, configured to determine a PCell reconfiguration completion message according to a target primary cell PCell and a target primary secondary cell PSCell which are to be switched, wherein the PCell reconfiguration completion message comprises a PSCell reconfiguration completion message and indication information, wherein the indication information is used to indicate the target PSCell and/or a target secondary node SN where the target PSCell is located;
a transmitting module, configured to transmit the PCell reconfiguration completion message to a network device.

12. The information processing apparatus according to claim 11, wherein the indication information comprises at least one of the following:
cell identification information of the target PSCell;
frequency information of the target PSCell;
a reconfiguration identifier corresponding to the PCell reconfiguration completion message, wherein the reconfiguration identifier is the same as a reconfiguration identifier carried in a reconfiguration message for a PCell issued by the network device;
numbering information of the target PSCell, wherein the numbering information comprises a serial number of the target PSCell in a candidate PSCell list of the PCell reconfiguration completion message;
identification information of the target PSCell, wherein the identification information of the target PSCell is an identifier assigned to a candidate PSCell associated with the PCell by a network side node where the target PSCell is located, and the network side node comprises an MN where the target PCell is located;
cell group identification information of a cell group where the target PSCell is located.

13. An information processing apparatus, **characterized by** being applied to network device and comprising:
a receiving module, configured to receive a PCell reconfiguration completion message transmitted by a user equipment, wherein the PCell reconfiguration completion message comprises a PSCell reconfiguration completion message and indication information, wherein the indication information is used to indicate a target PSCell and/or a target SN where a target PSCell is located;
a determining module, configured to determine the target SN according to the indication information;
a transmitting module, configured to transmit the PSCell reconfiguration completion message to the target SN.

14. The information processing apparatus according to claim 13, wherein the indication information comprises at least one of the following:
cell identification information of the target PSCell;
frequency information of the target PSCell;
a reconfiguration identifier corresponding to the PCell reconfiguration completion message, wherein the reconfiguration identifier is the same as a reconfiguration identifier carried in a reconfiguration message for a PCell issued by the network device;
numbering information of the target PSCell, wherein the numbering information comprises a serial number of the target PSCell in a candidate PSCell list of the PCell reconfiguration completion message;
identification information of the target PSCell, wherein the identification information of the target PSCell is an identifier assigned to a candidate PSCell associated with the PCell by a network side node where the target PSCell is located, and the network side node comprises an MN where the target PCell is located;
cell group identification information of a cell group where the target PSCell is located.

15. The information processing apparatus according to claim 13, wherein when the indication information comprises the cell identification information and/or the frequency information of the target PSCell, the determining module is specifically configured to:
determine a PSCell indicated by the frequency information and/or the cell identification information as the target PSCell;
determine a node where the target PSCell is located as the target SN.

16. The information processing apparatus according to claim 13, wherein when the indication information comprises the reconfiguration identifier corresponding to the PCell reconfiguration completion message, the determining module is specifically configured to:
determine, according to the reconfiguration identifier, a target reconfiguration message in the reconfiguration message for the PCell issued by the network device matching the reconfiguration identifier;
determine a PSCell applied in a PSCell reconfiguration message contained in the target reconfiguration message as the target PSCell;
determine a node where the target PSCell is located as the target SN.

17. The information processing apparatus according to claim 13, wherein when the indication information comprises the numbering information of the target PSCell, the determining module is specifically configured to:
determine, according to the numbering information, a PSCell in the candidate PSCell list which is at a same position as the numbering information as the target PSCell;
determine a node where the target PSCell is located as the target SN.

18. The information processing apparatus according to claim 13, wherein when the indication information comprises the identification information of the target PSCell, the determining module is specifically configured to:
determine, according to the identification information of the target PSCell, a PSCell in a candidate PSCell list matching the target PSCell as the target PSCell;
determine a node where the target PSCell is located as the target SN.

19. The information processing apparatus according to claim 13, wherein when the indication information comprises the cell group identification information of the cell group where the target PSCell is located; the determining module is specifically configured to:
acquire the cell group identification information of the cell group where the target PSCell is located according to the indication information;
determine, according to the cell group identification information, a cell group which is in a candidate cell group corresponding to the network device and of which cell group identification information is as same as the cell group identification information;
determine an SN where the cell group is located as the target SN.

20. The information processing apparatus according to any one of claims 13 to 19, wherein the transmitting module is further configured to:
transmit a node release indication to a further SN, wherein the further SN does not comprise the target SN, and the node release indication is used to indicate the further SN to release a reserved resource.

21. A user equipment, **characterized by** comprising:
a memory, configured to store a computer program;
a transceiver, configured to transmit and receive data under control of the processor;
a processor, configured to read the computer program from the memory and perform following operations:
determining a PCell reconfiguration completion message according to a target primary cell PCell and a target primary secondary cell PSCell which are to be switched, wherein the PCell reconfiguration completion message comprises a PSCell reconfiguration completion message and indication information, wherein the indication information is used to indicate the target PSCell and/or a target secondary node SN where the target PSCell is located;
transmitting the PCell reconfiguration completion message to a network device.

22. The user equipment according to claim 21, wherein the indication information comprises at least one of the following:
cell identification information of the target PSCell;
frequency information of the target PSCell;
a reconfiguration identifier corresponding to the PCell reconfiguration completion message, wherein the reconfiguration identifier is the same as a reconfiguration identifier carried in a reconfiguration message for a PCell issued by the network device;
numbering information of the target PSCell, wherein the numbering information comprises a serial number of the target PSCell in a candidate PSCell list of the PCell reconfiguration completion message;
identification information of the target PSCell, wherein the identification information of the target PSCell is an identifier assigned to a candidate PSCell associated with the PCell by a network side node where the target PSCell is located, and the network side node comprises an MN where the target PCell is located;
cell group identification information of a cell group where the target PSCell is located.

23. A network device, **characterized by** comprising: a memory, configured to store a computer program;
a transceiver, configured to transmit and receive data under control of a processor;
the processor, configured to read the computer program from the memory and perform following operations:
receiving a PCell reconfiguration completion message transmitted by a user equipment, wherein the PCell reconfiguration completion message comprises a PSCell reconfiguration completion message and indication information, wherein the indication information is used to indicate a target PSCell and/or a target SN where a target PSCell is located;
determining the target SN according to the indication information;
transmitting the PSCell reconfiguration completion message to the target SN.

24. The network device according to claim 23, wherein the indication information comprises at least one of the following:
cell identification information of the target PSCell;
frequency information of the target PSCell;
a reconfiguration identifier corresponding to the PCell reconfiguration completion message, wherein the reconfiguration identifier is the same as a reconfiguration identifier carried in a reconfiguration message for a PCell issued by the network device;
numbering information of the target PSCell, wherein the numbering information comprises a serial number of the target PSCell in a candidate PSCell list of the PCell reconfiguration completion message;
identification information of the target PSCell, wherein the identification information of the target PSCell is an identifier assigned to a candidate PSCell associated with the PCell by a network side node where the target PSCell is located, and the network side node comprises an MN where the target PCell is located;
cell group identification information of a cell group where the target PSCell is located.

25. The network device according to claim 23, wherein when the indication information comprises the cell identification information and/or the frequency information of the target PSCell, the determining the target SN based on the indication information comprises:
determining a PSCell indicated by the frequency information and/or the cell identification information as the target PSCell;
determining a node where the target PSCell is located as the target SN.

26. The network device according to claim 23, wherein when the indication information comprises the reconfiguration identifier corresponding to the PCell reconfiguration completion message, the determining the target SN based on the indication information comprises:
determining, according to the reconfiguration identifier, a target reconfiguration message in the reconfiguration message for the PCell issued by the network device matching the reconfiguration identifier;
determining a PSCell applied in a PSCell reconfiguration message contained in the target reconfiguration message as the target PSCell;
determining a node where the target PSCell is located as the target SN.

27. The network device according to claim 23, wherein when the indication information comprises the numbering information of the target PSCell, the determining the target SN based on the indication information comprises:
determining, according to the numbering information, a PSCell in the candidate PSCell list which is at a same position as the numbering information as the target PSCell;
determining a node where the target PSCell is located as the target SN.

28. The network device according to claim 23, wherein when the indication information comprises the identification information of the target PSCell, the determining the target SN based on the indication information comprises:
determining, according to the identification information of the target PSCell, a PSCell in a candidate PSCell list matching the target PSCell as the target PSCell;
determining a node where the target PSCell is located as the target SN.

29. The network device according to claim 23, wherein when the indication information comprises the cell group identification information of the cell group where the target PSCell is located, the determining the target SN according to the indication information comprises:
acquiring the cell group identification information of the cell group where the target PSCell is located according to the indication information;
determining, according to the cell group identification information, a cell group which is in a candidate cell group corresponding to the network device and of which cell group identification information is as same as the cell group identification information;
determining an SN where the cell group is located as the target SN.

30. The network device according to any one of claims 23 to 25, wherein the processor is further configured to: transmit a node release indication to a further SN, wherein the further SN does not comprise the target SN, and the node release indication is used to indicate the further SN to release a reserved resource.

31. A processor readable storage medium, wherein the processor readable storage medium stores a computer program for causing a processor to execute the information processing method according to any one of claims 1 to 2, or to execute the information processing method according to any one of claims 3 to 10.
